# EUROPEAN PATENT APPLICATION

(11) **EP 4 220 449 A1**
(43) Date of publication of application: **02.08.2023**
(21) Application number: 21960098.8
(22) Date of filing: 03.12.2021
(51) Int. Cl.: G06F 18/00, G06F 16/50

(54) **DATA ANNOTATION METHOD AND SYSTEM FOR IMAGE SEGMENTATION, AND IMAGE SEGMENTATION DEVICE**

(71) Applicant: Contemporary Amperex Technology Co., Limited, Fujian 352100 (CN)
(72) Inventor: JIANG, Guannan, Ningde, Fujian 352100 (CN); CHEN, Fei, Ningde, Fujian 352100 (CN); LI, Lu, Ningde, Fujian 352100 (CN)
(74) Representative: Rowlands, Stuart Michael
(86) International application number: PCT/CN2021/135280
(87) International publication number: WO 2023/097639

(57) **Abstract**

The present application provides a data annotation method and system for image segmentation and an image segmentation apparatus. The data annotation method includes: using an annotated training sample set for training, to obtain a data annotation model for automatically annotating an image sample; inputting an acquired original image sample to the data annotation model to obtain an automatic annotation result corresponding to the original image sample; visually presenting the automatic annotation result together with the original image sample based on a preset annotation strategy; receiving correction to the automatic annotation result, and converting the received correction into a corrected annotation result based on the annotation strategy; and using the corrected annotation result and the original image sample as a new annotated training sample to optimize the data annotation model.

## Description

### Technical Field

The present application relates to the field of artificial intelligence, and in particular, to a data annotation method and system for image segmentation and an image segmentation apparatus.

### Background Art

With the development of artificial intelligence technologies, artificial intelligence is increasingly applied to various scenarios. In the field of image recognition, many technologies that use artificial intelligence to improve the accuracy of image recognition have been developed.

In such artificial intelligence-based image recognition technologies, usually, an image recognition model is first trained based on a training data set, and then an image to be recognized is input to a trained model, and the model outputs a recognition result. A training process of the model is time-consuming, and a recognition accuracy rate of the model quite depends on accuracy and an amount of training data. However, it may be difficult and time-consuming to obtain a sufficient amount of accurate training data.

### Summary of the Invention

In view of the above problem, the present application provides a data annotation method and system for image segmentation, to improve efficiency of annotating data used as a training sample set, thereby shortening a time for preparing a training data set, and speeding up a training process of an image recognition model.

According to a first aspect, the present application provides a data annotation method for image segmentation, the method including the following steps: using an annotated training sample set for training, to obtain a data annotation model for automatically annotating an image sample; inputting an acquired original image sample to the data annotation model to obtain an automatic annotation result corresponding to the original image sample; visually presenting the automatic annotation result together with the original image sample based on a preset annotation strategy; receiving correction to the automatic annotation result, and converting the received correction into a corrected annotation result based on the annotation strategy; and using the corrected annotation result and the original image sample as a new annotated training sample to optimize the data annotation model. Through this data annotation manner, an amount of sample data that needs to be manually annotated may be greatly reduced, and a visualized annotation modification process is provided.

In some embodiments, the annotation strategy includes: indicating one or more predefined segmentation objects in a first group of one or more colors respectively; and indicating one or more annotation correction actions in a second group of one or more colors respectively. Setting the annotation strategy provides convenience for operators in viewing and correction in the visualized annotation modification process.

In some embodiments, the annotation correction actions include one or more of the following: addition, used to add an annotation of a segmentation object that is not recognized by the data annotation model; deletion, used to delete a wrong annotation; supplementation, used to annotate situations that are not defined in the current annotation strategy; and modification, used to modify an identifier of an object recognized by the data annotation model but incorrectly identified. By supporting these correction actions, the "addition, deletion, supplementation, and modification" manners of a data annotation are implemented, which significantly reduces an annotation workload of operators.

In some embodiments, the visually presenting the automatic annotation result together with the original image sample based on a preset annotation strategy includes: analyzing the automatic annotation result to obtain an object class of each annotation and a location of the annotation in the original image sample; and displaying, in an overlaying manner in the corresponding location in the original image sample, each annotation in a corresponding color defined in the annotation strategy for the object class. The annotation result is overlaid on the original image for viewing and correction, so that the annotation result may be presented visually.

In some embodiments, the receiving correction to the automatic annotation result, and converting the received correction into a corrected annotation result based on the annotation strategy further includes: visually presenting a process of the correction together with the automatic annotation result and the original image sample based on the annotation strategy. The annotation strategy is applied to a correction process, so that the correction process may also be visually presented.

In some embodiments, the method further includes: performing an accuracy rate test on the automatic annotation result of the current data annotation model; and in response to an accuracy rate exceeding a first threshold, reducing frequency at which the data annotation model is optimized.

In some embodiments, the method further includes: in response to the accuracy rate exceeding a second threshold greater than the first threshold, using the automatic annotation result of the data annotation model and the corresponding original image sample as a new annotated training sample.

In some embodiments, the method further includes: in response to the accuracy rate exceeding a third threshold greater than the second threshold, stopping optimization of the data annotation model. Through the setting of the above threshold, certain links may be further chosen to be skipped at different stages of model optimization iteration, thereby reducing an overall time consumption, and improving efficiency of entire data annotation work.

According to a second aspect, the present application provides a data annotation system for image segmentation, the data annotation system including: a model training module configured to use an annotated training sample set for training, to obtain a data annotation model for automatically annotating an image sample; an automatic annotation module configured to: obtain a data annotation model from the model training module; and input an acquired original image sample to the data annotation model to obtain an automatic annotation result corresponding to the original image sample; and a visualized annotation module configured to: visually present the automatic annotation result together with the original image sample based on a preset annotation strategy; receive correction of a user to the automatic annotation result, and convert the received correction into a corrected annotation result based on the annotation strategy; and provide the corrected annotation result and the original image sample to the model training module as a new annotated training sample, to optimize the data annotation model.

Similarly, the data annotation system in the present application may greatly reduce an amount of sample data that needs to be manually annotated and an annotation workload, and may acquire a sufficient amount of sample data in a short period of time.

In some embodiments, the annotation strategy includes: indicating one or more predefined segmentation objects in a first group of one or more colors respectively; and indicating one or more annotation correction actions in a second group of one or more colors respectively. Setting the annotation strategy provides convenience for operators in viewing and correction in the visualized annotation modification process.

In some embodiments, the annotation correction actions include: addition, used to add an annotation of a segmentation object that is not recognized by the data annotation model; deletion, used to delete a wrong annotation; supplementation, used to annotate situations that are not defined in the current annotation strategy; and modification, used to modify an identifier of an object recognized by the data annotation model but incorrectly identified. By supporting these correction actions, the "addition, deletion, supplementation, and modification" manners of a data annotation are implemented, which significantly reduces an annotation workload of operators.

In some embodiments, the visualized annotation module is further configured to: analyze the automatic annotation result to obtain an object class of each annotation and a location of the annotation in the original image sample; and display, in an overlaying manner in the corresponding location in the original image sample, each annotation in a corresponding color defined in the annotation strategy for the object class. The annotation result is overlaid on the original image for viewing and correction, so that the annotation result may be presented visually.

In some embodiments, the visualized annotation module is further configured to: visually present a process of the correction together with the automatic annotation result and the original image sample based on the annotation strategy. The annotation strategy is applied to a correction process, so that the correction process may also be visually presented.

In some embodiments, the data annotation system further includes a test module configured to perform an accuracy rate test on the automatic annotation result of the current data annotation model; and in response to an accuracy rate exceeding a first threshold, the model training module reduces frequency at which the data annotation model is optimized.

In some embodiments, in response to the accuracy rate exceeding a second threshold greater than the first threshold, the visualized annotation module stops visually presenting the automatic annotation result.

In some embodiments, in response to the accuracy rate exceeding a third threshold greater than the second threshold, the model training module stops optimization of the data annotation model. Through the setting of the above threshold, certain links may be further chosen to be skipped at different stages of model optimization iteration, thereby reducing an overall time consumption, and improving efficiency of entire data annotation work.

According to a third aspect, the present application provides an image segmentation apparatus, including: a storage device configured to store computer instructions; and a processing unit configured to cause the image segmentation apparatus to implement the data annotation method as described in the first aspect of the present application when the computer instructions are executed. The image segmentation apparatus in the present application may greatly reduce an amount of sample data that need to be manually annotated and an annotation workload, and may acquire a sufficient amount of sample data in a short period of time, so that a time for the apparatus to be applied to a production line can be significantly shortened.

The above description is only an overview of the technical solutions of the present application. In order to more clearly understand the technical means of the present application to implement same according to the contents of the specification, and in order to make the above and other objects, features, and advantages of the present application more obvious and understandable, specific embodiments of the present application are exemplarily described below.

### Brief Description of the Drawings

In order to illustrate the technical solutions of the embodiments of the present application more clearly, the drawings required in the description of the embodiments of the present application will be described briefly below. It will be apparent that the drawings described below are merely some embodiments of the present application, and for those of ordinary skill in the art, other drawings can also be obtained from these drawings without any creative efforts.
FIG. 1 is an example flowchart of a data annotation method for image segmentation according to an embodiment of the present application;
FIG. 2 is a schematic diagram showing an initial annotation of a tab region that is presented together with an original image sample according to an embodiment of the present application;
FIG. 3 is a mask layer corresponding to the initial annotation of FIG. 2 according to an embodiment of the present application;
FIG. 4 is a schematic diagram of "addition, deletion, supplementation, and modification" manners of an annotation according to an embodiment of the present application;
FIG. 5 is a schematic diagram of a visualized annotation process according to an embodiment of the present application;
FIG. 6 is an example structural diagram of a data annotation system for image segmentation according to an embodiment of the present application;
FIG. 7 is an example structural diagram of a data annotation system for image segmentation according to another embodiment of the present application;
FIG. 8 is an example structural diagram of an image segmentation system according to an embodiment of the present application; and
FIG. 9 is an example structural diagram of an image segmentation apparatus according to an embodiment of the present application.

In the accompanying drawings, the figures are not drawn to scale.

### Detailed Description of Embodiments

Embodiments of the technical solutions of the present application will be described in more detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "including" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the technical features modified thereby. In the description of the embodiments of the present application, the phrase "a plurality of' means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: the three instances of A alone, A and B simultaneously, and B alone. In addition, the character "j" herein generally indicates an "or" relationship between the associated objects.

In the current industrial manufacturing field, such as a traction battery production line, quality detection systems based on machine vision may be deployed. Such quality detection systems are trained to detect manufacturing defects based on captured images of various workpieces on the production line. The detection accuracy of such quality detection systems depends on the quality of an image recognition model, that is, whether it can correctly recognize different objects in the captured images.

Image segmentation technologies based on artificial intelligence are introduced to improve the recognition accuracy of the image recognition model. In the image segmentation technologies, different types of objects recognized in the images may be annotated. For example, for a tab region of a lithium battery, tab line parts may be recognized from the images, and the tab line parts and other parts may be annotated separately, to separate the tab line part as a foreground from a background.

Training of such an image recognition model requires a large amount of manually annotated data for images of the tab region and a relatively high accuracy of annotation, and mis-annotation may have a great impact on a predictive capability of the model. However, manually annotating data is work that consumes a lot of manpower and material resources. In addition, current annotation work is very tedious and time-consuming.

In view of the above, to solve the problem of low efficiency of annotating data, the present application provides an improved data annotation manner. First, a small number of annotated samples are trained to obtain a preliminary image segmentation model. Subsequently, after sending unannotated samples into the model, a pre-annotated result is obtained. Different from the prior art, the pre-annotation result is directly presented on an original image to form a result map, and a user is allowed to directly correct an annotation by performing "addition, deletion, supplementation, and modification" on the result map. The corrected result can be used as a new annotated sample to iteratively optimize the image segmentation model. In this way, a sufficient number of training samples, that is, annotated and corrected samples, can be collected in a relatively short period of time, while a workload of manually annotating data required in the process is significantly reduced. In addition, the data annotation process has become more intuitive and convenient than that in the prior art.

It can be appreciated that the present application can be applied to the field of quality detection combined with artificial intelligence, and the method and system for quality detection disclosed in the embodiments of the present application may be used, but not limited to, for quality detection for a tab region of a traction battery, and may be further used for quality detection of various other products in modern industrial manufacturing.

In the following embodiments, for the convenience of description, image segmentation and data annotation for the tab region of the traction battery are taken as an example for description.

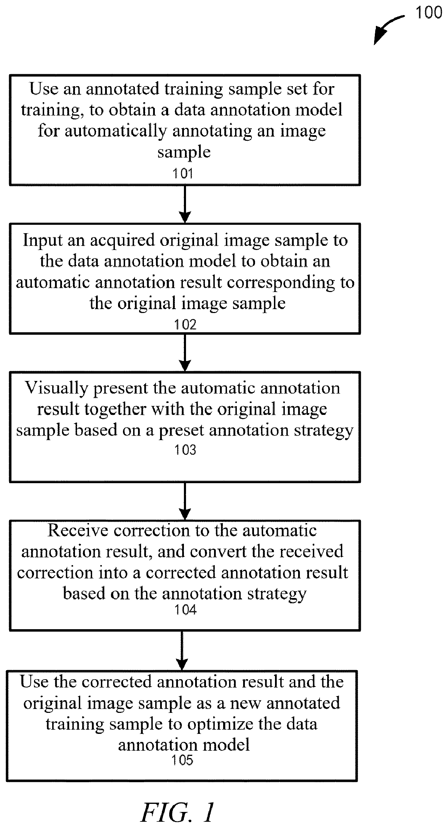

According to an embodiment of the present application, FIG. 1 is an example flowchart of a data annotation method 100 for image segmentation according to an embodiment of the present application. As shown in FIG. 1, the method 100 starts at step 101 in which an annotated training sample set is used for training, to obtain a data annotation model for automatically annotating an image sample. In step 102, an acquired original image sample is input to the data annotation model to obtain an automatic annotation result corresponding to the original image sample. In step 103, the automatic annotation result is visually presented together with the original image sample based on a preset annotation strategy. Next, in step 104, correction to the automatic annotation result is received, and the received correction is converted into a corrected annotation result based on the annotation strategy. Finally, in step 105, the corrected annotation result and the original image sample are used as a new annotated training sample to optimize the data annotation model.

The data annotation model used for automatic annotation of the image sample may be any image recognition model in the prior art, sometimes referred to as an image segmentation model. The model is trained to recognize an input image sample and identify different types of objects included in the image. Taking the recognition of a tab region of a traction battery as an example, the trained model can at least distinguish between a tab part and a non-tab part, and annotate them accordingly. Pixels that are not recognized as belonging to any type of object may not be annotated. In an example where only binary discrimination is performed, only objects of interest can be annotated, such as the tab part in this example. As an output result of the model, a recognition result of a specific pixel is usually represented by a paired form of a pixel index of the image and an annotation of a type of a recognized object. For example, f (106,29), 1} may be used to represent that a pixel (106, 29) in the image sample is a tab (annotated as "1"), and similarly, positions of all pixels recognized as tabs may be recorded. All annotation results may be converted into a specific file type after specific format conversion, and a commonly used example annotation result file type is a JSON file.

Such an image recognition model may be trained based on artificial intelligence (AI) technologies. As with training another AI-based model, a training sample set needs to be provided. In this example, a batch of typical images of an original electrode region can be selected and manually annotated, and then this batch of annotated images can be used as a training sample set, to obtain, through training, a model that can output, based on input image samples, their corresponding annotation results. As an example, in step 101, only a small number of manually annotated images may be used as training samples, for example, 100 images. It can be understood that a recognition accuracy rate of an image recognition model trained by using only 100 training samples may not be high. As a comparison, usually, training a similar model requires more than 10000 images as training samples. However, considering that the data annotation model here is only a preliminary model, and its automatic annotation results may further undergo subsequent correction, the number of initial training samples required being small is conducive to reducing a workload of manual annotation.

After the preliminary data annotation model is trained, newly acquired images of the tab region can be input to the data annotation model one by one, and the model automatically gives initial annotation results corresponding to the input images.

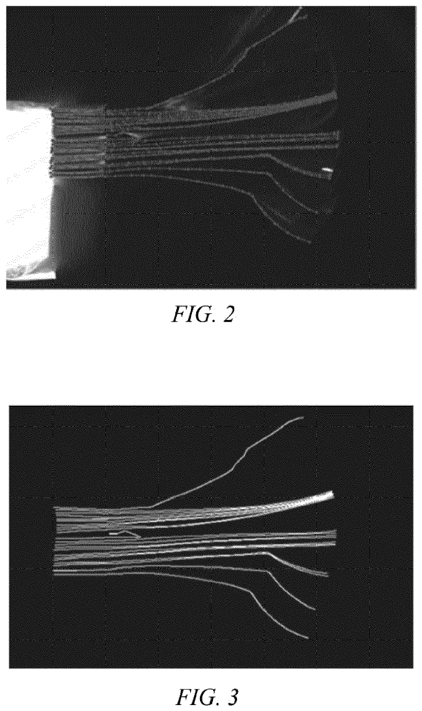

The automatic annotation results given by the data annotation model can be visually presented together with corresponding original image samples based on the preset annotation strategy. Referring to FIG. 2 and FIG. 3, FIG. 2 is a schematic diagram showing an initial annotation of a tab region that is presented together with an original image sample according to an embodiment of the present application, and FIG. 3 is a mask layer corresponding to the initial annotation of FIG. 2.

The annotation strategy may specify how various objects or different annotation actions are presented, for example, in different colors. As shown in FIG. 2, pixels annotated as "tab parts" are presented in red, and these red pixels are overlaid on an original image sample according to pixel coordinates. This annotation layer that can be overlaid on the original image sample can also be converted into a mask layer or a mask image, which is directly referred to as a mask, or sometimes referred to as a semantic segmentation image, as shown in FIG. 3. The mask image may be used to train another model, for example, a defect detection model or another quality detection model is further trained based on the mask image. In a binarization scenario, a typical mask image is shown in FIG. 3. It can be understood that the mask for machine training does not need to set display colors for different annotations, and the colors are only required for the convenience of users in viewing and presentation.

After the automatic annotation result is presented, it is allowed to manually correct the automatic annotation result directly on the annotation layer. For example, an operator can find that a part that should be a tab is not annotated and is annotated in red like other tab parts, and an annotation can be directly added on the annotation layer through an action similar to a hand drawing action. Accordingly, this correction can be received and recorded, and the received correction is converted into a corrected annotation result based on the annotation strategy. For example, supplemented annotations may be added to original annotation results, and deleted and modified annotations can also be similarly merged with the original annotation results, and finally stored as a new annotation result file with an original format.

The corrected annotation result is human-confirmed annotated data like the previous annotated training sample set. As mentioned above, because only a limited number of training samples are used in the preliminarily trained data annotation model, and an image segmentation accuracy rate of the model, that is, an automatic annotation accuracy rate, may not reach a high level in an initial stage, a new corrected annotation result and its corresponding original image are used as a new training sample to continuously optimize the initial data annotation model.

Through the above data annotation manner, an amount of sample data that needs to be manually annotated may be greatly reduced, for example, from 10000 to 100. Subsequently, it is possible to conveniently correct an automatic annotation result of the preliminary annotation model, and a workload required to correct an automatic annotation result is also significantly less than a workload required for a complete annotation of a brand new image, especially an annotation of the tab region in this example, because tab lines are very thin and close to each other, it may take more than 1 hour to annotate a brand new picture, but it may take only a few minutes to correct an annotation result. In addition, with the continuous optimization of the initial data annotation model, an accuracy rate of automatic annotation results will continue to increase, and therefore, a workload and a time required for later correction will be accordingly reduced. Thus, it is possible to acquire a sufficient amount of sample data in a short period of time.

According to some embodiments of the present application, optionally, the annotation strategy may include: indicating one or more predefined segmentation objects in a first group of one or more colors respectively; and indicating one or more annotation correction actions in a second group of one or more colors respectively.

Types of segmentation objects that can be recognized by the image segmentation model are predefined before training, and in the training sample set, corresponding annotations are made based on the predefined object types. Therefore, different colors used when different objects are presented may be specified in the annotation strategy to facilitate distinguishing, to present different objects. In another aspect, the present application allows the operator to correct a presented annotation result, and the correction may include one or more correction actions, such as addition, deletion, supplementation, and modification. As an example, the operator may first click a correction action button in an annotation presentation and correction interface to indicate which action is to be performed next, and then operate on the annotation layer. The process is similar to using a common computer drawing tool. Different correction actions may be similarly represented in different colors to allow the operator to see the correction actions performed by the operator more intuitively. The first group of colors used to represent different objects and the second group of colors used to represent different correction actions may be different from each other. Optionally, some colors in the second group of colors may also be the same as some colors in the first group of colors. For example, for the "addition" action, an added annotation may also be presented in the same type of color as an annotated object, for example, in this example, an annotation of a newly added tab part can also be represented in the same red color.

Setting the annotation strategy makes it convenient for the operator to view automatic annotation results of different objects, and then determine whether the automatic annotation results are correct, and also makes it convenient to indicate different annotation correction actions and their results in a correction process.

According to some embodiments of the present application, optionally, the annotation correction actions may include one or more of the following: addition, used to add an annotation of a segmentation object that is not recognized by the data annotation model; deletion, used to delete a wrong annotation; supplementation, used to annotate situations that are not defined in the current annotation strategy; and modification, used to modify an identifier of an object recognized by the data annotation model but incorrectly identified.

There may be errors in the automatic annotation results because the model may not correctly perform recognition in some cases for various reasons, and the errors need to be corrected. For example, in the example of the tab, assuming that the data annotation model is trained to recognize and annotate a tab part, the annotation strategy specifies that pixels annotated as tab parts are presented in red. Therefore, the tab parts being presented in red when seen from the presented results indicates that automatic annotation results are correct, otherwise it indicates that there is an incorrect result. Here are some examples of common errors:
(1) A part that is a tab line but not painted in red. Most of the reasons for this are incorrect segmentation due to reflections or curvature. For such a situation, the operator can use the correction action "addition" to make correction.
(2) A part that is not a tab line but painted in red. Most of the reasons for this are pseudo tab lines caused by lighting, that is, artifacts. For such a situation, the operator can use the correction action "deletion" to make correction.
(3) A part where a segmentation effect is poor, such as the bonding bifurcation and the corner of a tab line. The reason for this may be that some pixels are not correctly recognized due to dense tab lines. For such a situation, the operator can use the correction actions "deletion" and/or "addition" for correction according to the situation, for example, deleting a bonded part first, and then adding non-bonded tab lines.
(4) Tab lines that appear to be broken. The reason for this is usually that some pixels belonging to a tab are not correctly recognized. For such a situation, the operator can perform the "addition" action according to the situation to make correction.
(5) The situation where an annotation is correct but needs to be supplemented. For example, foldover occurs in a tab and is correctly obtained through segmentation by the model, but this is one of the quality defects that need to be detected in the follow-up link. For such a situation, once the situation being found in this link, the operator can use the correction action "supplementation" to make correction.
(6) The situation where recognition is performed but an annotation is incorrect. Although there may be only cases of excessive annotations or missing annotations in a binarization model (namely, a single-object model), in a multi-object model, there may be cases where one object is recognized as another. For such a situation, the operator can use the correction action "modification" to make correction.

By defining the annotation correction action, the present application allows the operator to correct an automatic annotation result by performing "addition, deletion, supplementation, and modification". This correction manner is intuitive and easy to operate for the operator, and also significantly reduces a workload of correcting the annotation result.

According to some embodiments of the present application, optionally, the visually presenting the automatic annotation result together with the original image sample based on a preset annotation strategy may further include: analyzing the automatic annotation result to obtain an object class of each annotation and a location of the annotation in the original image sample; and displaying, in an overlaying manner in the corresponding location in the original image sample, each annotation in a corresponding color defined in the annotation strategy for the object class.

As described above, the automatic annotation result may be in a form of a file with a specific format, such as a JSON file. In the file, a result in which each pixel is recognized as an object class is recorded in a form of data. According to different file formats, the file may be parsed, so that the above information is read from the file. Then, according to a pre-defined annotation strategy, the recognized object constructs an annotation map according to its pixel coordinates and their corresponding colors, and the annotation map is aligned with an original image in a form of a layer, and overlaid on the original image.

This presentation manner makes it easy for the operator to view an automatic annotation result, and makes it convenient for comparison and determination of whether the automatic annotation result is correct.

According to some embodiments of the present application, optionally, the receiving correction to the automatic annotation result, and converting the received correction into a corrected annotation result based on the annotation strategy may further include: visually presenting a process of the correction together with the automatic annotation result and the original image sample based on the annotation strategy.

As mentioned above, the annotation strategy can specify how different objects and different correction actions may be presented. Therefore, a complete process of correction can be presented visually based on the annotation strategy. For example, when the operator selects the "addition" action, it indicates that the next input on an annotation map will represent adding an annotation of the tab part to a corresponding pixel. Because the tab part is presented in red, with the input of the user, a corresponding pixel can be directly expressed in red, so that the operator can intuitively view a result of a correction action of the operator.

By visually presenting a correction process, the entire correction process can also achieve an effect similar to "what you see is what you get" for the operator, and thus it is very convenient.

According to some embodiments of the present application, optionally, the method 100 may further include: performing an accuracy rate test on the automatic annotation result of the current data annotation model; and in response to an accuracy rate exceeding a first threshold, reducing frequency at which the data annotation model is optimized.

Like other AI-based models, the data annotation model can be continuously optimized with more training samples, so that the accuracy rate of the model is continuously improved. The optimization frequency refers to frequency at which the model is iteratively optimized. For example, it can be set to optimize the model every time 100 new training samples are accumulated. Model optimization takes time, too frequent optimization will take too much time, and an optimization effect is not obvious.

When the accuracy rate reaches a certain level (for example, 99%), it can be considered that it has reached an acceptable level, and the frequency at which the data annotation model is optimized can be reduced at this time. Intuitively speaking, at this time, an automatic annotation result of a new image input for each frame is basically completely correct, and almost rarely needs to be corrected. As an example, an accuracy rate of data annotation can be measured based on a ratio of the number of corrected pixels to the total number of annotated pixels in the entire image. For example, if there are 10000 pixels annotated as tabs in the entire image, and 90 pixels are considered incorrect and then corrected, an accuracy rate is 1 - (90/10000) × 100% = 99.1%. Alternatively, it can also be measured by a ratio of the number of corrected pixels to the total number of pixels included in the entire image. An average value of accuracy rates of a plurality of consecutive images can be used as a test result of an accuracy rate of the model, to make the test result more accurate. Because 99.1% is greater than the first threshold (99%), there is no need for frequent optimization, and the frequency of optimization can be appropriately reduced, for example, from frequency at which the model is optimized once every time 100 new training samples are accumulated, to frequency at which the model is optimized once every time 300 new training samples are accumulated.

By setting the accuracy rate as a setting standard for the frequency at which the data annotation model is iteratively optimized, the optimization frequency can be reduced when the data annotation model is optimized to an acceptable level, thereby reducing an overall time consumption, and improving efficiency of entire data annotation work.

According to some embodiments of the present application, optionally, the method 100 may further include: in response to the accuracy rate exceeding a second threshold greater than the first threshold, using the automatic annotation result of the data annotation model and the corresponding original image sample as a new annotated training sample.

As the accuracy rate gets higher and higher, automatic annotation results are getting closer and closer to being completely correct. For example, after the accuracy rate test, the accuracy rate has reached the second threshold of 99.5%. At this time, even without manual correction, directly using the automatic annotation results as training samples will not significantly affect an effect of subsequent model training. Therefore, a manual correction process can be skipped to save time, but further iterative optimization of the model can still continue, but optionally can be done less frequently than before, for example, the model is optimized once every time 1000 new training samples are accumulated.

Through this setting, a process of presenting and correcting an automatic annotation result can be further omitted when a segmentation accuracy rate of the model is high enough, which can further reduce an overall time consumption, and improve efficiency of an entire data annotation work.

According to some embodiments of the present application, optionally, the method 100 may further include: in response to the accuracy rate exceeding a third threshold greater than the second threshold, stopping optimization of the data annotation model.

As the accuracy rate is further increased, for example, to a third threshold of 99.95%, at which point the need for further iterations of the model has become so low that optimization can be stopped. At this time, the model is quite complete for image segmentation purposes in a tab region. This means that if it is required to identify the tab region, for example, only tabs and non-tabs need to be identified, the data annotation model can be directly used as an image recognition model for the tab region. In another aspect, if it is required to generate more training samples for other purposes, the model with this level of accuracy has fully reached a level of direct use, and it is only required to generate enough training samples according to a required number of samples.

Through this setting, the iterative optimization process of the model can be further skipped when a segmentation accuracy rate of the model is high enough, which can further reduce an overall time consumption, and improve efficiency of an entire data annotation work.

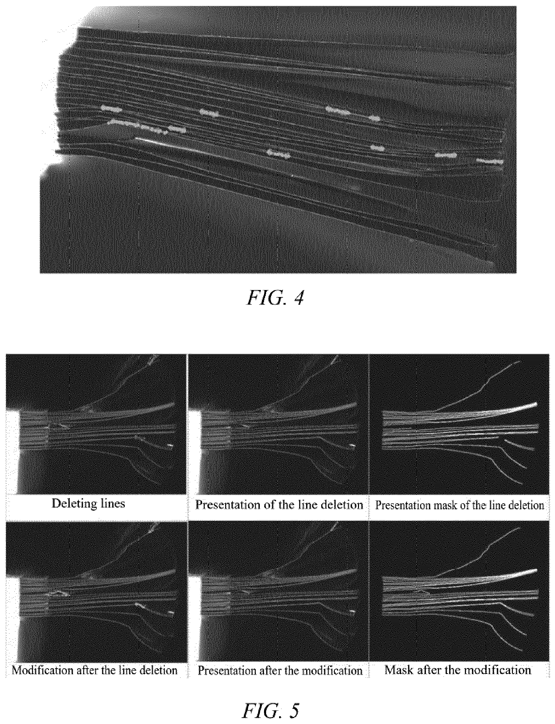

According to some embodiments of the present application, referring to FIG. 4 and FIG. 5, FIG. 4 shows a specific example of "addition, deletion, supplementation, and modification" manners of an annotation according to the present application, and FIG. 5 is a schematic diagram of a visualized annotation process. As shown in FIG. 4, a tab part is annotated in red in the region, and a region to be deleted is annotated in green.

A yellow region is a corrected and normal region, that is, the region is a normal tab line region but needs to be corrected. Usually, such a region refers to the part where a tab has bonding, which is first removed with a green annotation, and then annotated in yellow to indicate correction, so that the tab region segmented by the model is two non-bonded lines.

A blue annotation indicates a supplemented and anomalous region. This is a tab in which foldover occurs and is not correctly obtained through segmentation. The foldover is an unallowable defect, but the model still needs to obtain it through segmentation. It can be understood that the present application is not limited to the above situations, and if a new tab foldover or defect form is found, a new annotation strategy can be designed accordingly.

FIG. 5 is a schematic diagram of a visualized annotation process according to an embodiment of the present application. In an upper-left figure of FIG. 5, a green annotation indicates that a segmented region is to be deleted, and a resulting mask does not include lines included by the green annotation, as shown in an upper-right figure of FIG. 5. However, in this process, some tab line regions are excessively deleted to cause the mask to be broken, and therefore, the mask needs to be modified again. In a lower-left figure of FIG. 5, a yellow annotation indicates that a line after the deletion is modified and is further added to a segmentation result, including the above break, the folded tab line, and the bent tab line region. Therefore, a tab line after the modification is included again in a resulting mask after the modification, as shown in a lower-right figure of FIG. 5.

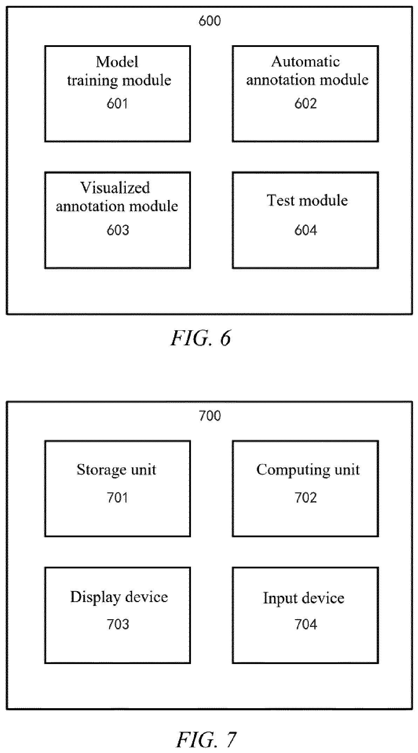

According to some embodiments of the present application, FIG. 6 is an example structural diagram of a data annotation system 600 for image segmentation according to an embodiment of the present application. As shown in FIG. 6, the data annotation system 600 may include: a model training module 601, the model training module 601 being configured to use an annotated training sample set for training, to obtain a data annotation model for automatically annotating an image sample; an automatic annotation module 602 configured to: obtain a data annotation model from the model training module; and input an acquired original image sample to the data annotation model to obtain an automatic annotation result corresponding to the original image sample; and a visualized annotation module 603, the visualized annotation module 603 being configured to: visually present the automatic annotation result together with the original image sample based on a preset annotation strategy; receive correction of a user to the automatic annotation result, and convert the received correction into a corrected annotation result based on the annotation strategy; and provide the corrected annotation result and the original image sample to the model training module as a new annotated training sample, to optimize the data annotation model.

Similar to the data annotation method of the present application, the data annotation system in the present application may greatly reduce an amount of sample data that need to be manually annotated and an annotation workload, and may acquire a sufficient amount of sample data in a short period of time.

According to some embodiments of the present application, optionally, the annotation strategy may include: indicating one or more predefined segmentation objects in a first group of one or more colors respectively; and indicating one or more annotation correction actions in a second group of one or more colors respectively.

According to some embodiments of the present application, optionally, the annotation correction actions may include one or more of the following: addition, used to add an annotation of a segmentation object that is not recognized by the data annotation model; deletion, used to delete a wrong annotation; supplementation, used to annotate situations that are not defined in the current annotation strategy; and modification, used to modify an identifier of an object recognized by the data annotation model but incorrectly identified.

According to some embodiments of the present application, optionally, the visualized annotation module 603 may be further configured to: analyze the automatic annotation result to obtain an object class of each annotation and a location of the annotation in the original image sample; and display, in an overlaying manner in the corresponding location in the original image sample, each annotation in a corresponding color defined in the annotation strategy for the object class.

According to some embodiments of the present application, optionally, the visualized annotation module 603 may be further configured to: visually present a process of the correction together with the automatic annotation result and the original image sample based on the annotation strategy.

According to some embodiments of the present application, optionally, the data annotation system 600 further includes a test module 604 configured to perform an accuracy rate test on the automatic annotation result of the current data annotation model. In response to an accuracy rate exceeding a first threshold, the model training module 601 reduces frequency at which the data annotation model is optimized.

According to some embodiments of the present application, optionally, in response to the accuracy rate exceeding a second threshold greater than the first threshold, the visualized annotation module 602 stops visually presenting the automatic annotation result.

According to some embodiments of the present application, optionally, in response to the accuracy rate exceeding a third threshold greater than the second threshold, the model training module 601 stops optimization of the data annotation model.

According to some embodiments of the present application, FIG. 7 is an example structural diagram of a data annotation system 700 for image segmentation according to another embodiment of the present application. As shown in FIG. 7, the data annotation system 700 includes: a storage unit 701 configured to store an annotated training sample set, an acquired original image sample, an automatic annotation result, an annotation strategy, and a corrected annotation result; a computing unit 702, the computing unit 702 being configured to perform the data annotation method for image segmentation of the present application as described above; a display device 703 configured to display the automatic annotation result and a correction process; and an input device 704 configured to receive correction to the automatic annotation result.

The storage unit 701 may include a RAM, a ROM, or a combination thereof. In some cases, the storage unit 701 may include, in particular, a basic input/output system (BIOS) that may control basic hardware or software operations, such as interaction with peripheral components or devices.

The computing unit 702 may include an intelligent hardware device (for example, a general-purpose processor, a digital signal processor (DSP), a central processing unit (CPU), a microcontroller, an application-specific integrated circuit (ASIC), a field programmable gate array (FPGA), a programmable logic device, a discrete gate or transistor logic component, a discrete hardware component, or any combination thereof).

The display device 703 may include displays of various types and sizes (such as an LCD, an LED, and an OLED). The input device 704 includes input devices such as a keyboard, a mouse, a trackball, and a touch pad, and is configured to receive input from a user. In some examples, the display device 703 may be a touch display, that is, it is integrated with an input function, so that the user can perform annotation and correction through direct hand drawing on the display.

Similarly, the above data annotation system can visually present the annotation results and facilitate annotation correction, significantly reduce an amount of sample data that need to be manually annotated and an annotation workload, and can acquire a sufficient amount of sample data in a short period of time.

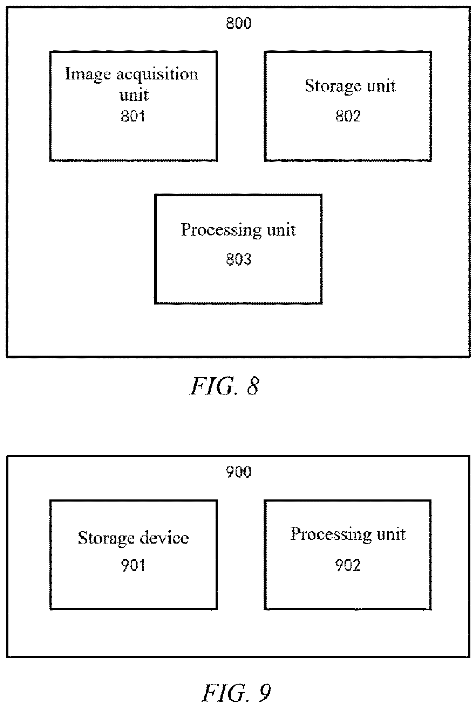

According to some embodiments of the present application, FIG. 8 is an example structural diagram of an image segmentation system 800 according to an embodiment of the present application. As shown in FIG. 8, the image segmentation system 800 includes: an image acquisition unit 801 configured to acquire a sample image; a storage unit 802 configured to store an image segmentation model, where the image segmentation model is trained by using an annotated training sample set obtained through the data annotation method described in the present application; and a processing unit 803 configured to use an image segmentation model to perform image segmentation on the acquired sample image, and output annotation results of annotating different objects in the sample image.

The image segmentation system 800 can be widely deployed and applied to various lines of the modern industrial production line, and is used to perform image recognition on one or more products or their parts on the production line through image segmentation and then detect whether there are quality defects in them. The data annotation method of the present application may be used when the system is deployed, to obtain sufficient training sample sets and to train an image segmentation model, a time for the system to be applied to the production line can be significantly shortened.

According to some embodiments of the present application, FIG. 9 is an example structural diagram of an image segmentation apparatus 900 according to an embodiment of the present application. As shown in FIG. 9, the image segmentation apparatus 900 includes a storage device 901 configured to store computer instructions; and a processing unit 902 configured to cause the image segmentation apparatus 900 to implement the data annotation method described in the present application when the computer instructions stored in the storage device 901 are executed. Similarly, the data annotation method of the present application may be used when the system is deployed, to obtain sufficient training sample sets, a time for the system to be applied to the production line can be significantly shortened.

The various illustrative blocks and modules described in connection with the disclosure herein can be implemented or performed with a general-purpose processor, a DSP, an ASIC, an FPGA, or another programmable logic device, discrete gate, or transistor logic, a discrete hardware component, or any combination thereof, that is designed to perform functions described herein. The general-purpose processor may be a microprocessor, but in an alternative, the processor may be any conventional processor, controller, microcontroller, or state machine. The processor may be alternatively implemented as a combination of computing devices (for example, a combination of a DSP and a microprocessor, a plurality of microprocessors, one or more microprocessors in conjunction with a DSP core, or any other such configurations).

The functions described herein may be implemented in hardware, software executed by a processor, firmware, or any combination thereof. If implemented in software executed by a processor, the functions may be stored on or transmitted over a computer-readable medium as one or more instructions or codes. Other examples and implementations are within the scope of the present disclosure and the appended claims. For example, due to the nature of software, the functions described herein may be implemented by using software executed by a processor, hardware, firmware, hardwiring, or any combination thereof. Features implementing the functions may also be physically located at various locations, including being distributed such that portions of the functions are implemented at different physical locations.

While the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A data annotation method for image segmentation, **characterized in that** the method comprises the following steps:
using an annotated training sample set for training, to obtain a data annotation model for automatically annotating an image sample;
inputting an acquired original image sample to the data annotation model to obtain an automatic annotation result corresponding to the original image sample;
visually presenting the automatic annotation result together with the original image sample based on a preset annotation strategy;
receiving correction to the automatic annotation result, and converting the received correction into a corrected annotation result based on the annotation strategy; and
using the corrected annotation result and the original image sample as a new annotated training sample to optimize the data annotation model.

2. The method of claim 1, **characterized in that** the annotation strategy comprises:
indicating one or more predefined segmentation objects in a first group of one or more colors respectively; and
indicating one or more annotation correction actions in a second group of one or more colors respectively.

3. The method of claim 2, **characterized in that** the annotation correction actions comprise one or more of the following:
addition, used to add an annotation of a segmentation object that is not recognized by the data annotation model;
deletion, used to delete a wrong annotation;
supplementation, used to annotate situations that are not defined in the current annotation strategy; and
modification, used to modify an identifier of an object recognized by the data annotation model but incorrectly identified.

4. The method of claim 2, **characterized in that** the visually presenting the automatic annotation result together with the original image sample based on a preset annotation strategy comprises:
analyzing the automatic annotation result to obtain an object class of each annotation and a location of the annotation in the original image sample; and
displaying, in an overlaying manner in the corresponding location in the original image sample, each annotation in a corresponding color defined in the annotation strategy for the object class.

5. The method of any one of claims 1 to 4, **characterized in that** the receiving correction to the automatic annotation result, and converting the received correction into a corrected annotation result based on the annotation strategy further comprises:
visually presenting a process of the correction together with the automatic annotation result and the original image sample based on the annotation strategy.

6. The method of any one of claims 1 to 5, **characterized in that** the method further comprises:
performing an accuracy rate test on the automatic annotation result of the current data annotation model; and
in response to an accuracy rate exceeding a first threshold, reducing frequency at which the data annotation model is optimized.

7. The method of claim 6, **characterized in that** the method further comprises:
in response to the accuracy rate exceeding a second threshold greater than the first threshold, using the automatic annotation result of the data annotation model and the corresponding original image sample as a new annotated training sample.

8. The method of claim 7, **characterized in that** the method further comprises:
in response to the accuracy rate exceeding a third threshold greater than the second threshold, stopping optimization of the data annotation model.

9. A data annotation system for image segmentation, **characterized in that** the data annotation system comprises:
a model training module configured to use an annotated training sample set for training, to obtain a data annotation model for automatically annotating an image sample;
an automatic annotation module configured to:
obtain a data annotation model from the model training module; and
input an acquired original image sample to the data annotation model to obtain an automatic annotation result corresponding to the original image sample; and
a visualized annotation module configured to:
visually present the automatic annotation result together with the original image sample based on a preset annotation strategy;
receive correction of a user to the automatic annotation result, and convert the received correction into a corrected annotation result based on the annotation strategy; and
provide the corrected annotation result and the original image sample to the model training module as a new annotated training sample, to optimize the data annotation model.

10. The data annotation system of claim 9, **characterized in that** the annotation strategy comprises:
indicating one or more predefined segmentation objects in a first group of one or more colors respectively; and
indicating one or more annotation correction actions in a second group of one or more colors respectively.

11. The data annotation system of claim 10, **characterized in that** the annotation correction actions comprise:
addition, used to add an annotation of a segmentation object that is not recognized by the data annotation model;
deletion, used to delete a wrong annotation;
supplementation, used to annotate situations that are not defined in the current annotation strategy; and
modification, used to modify an identifier of an object recognized by the data annotation model but incorrectly identified.

12. The data annotation system of any one of claims 9 to 11, **characterized in that** the visualized annotation module is further configured to:
analyze the automatic annotation result to obtain an object class of each annotation and a location of the annotation in the original image sample; and
display, in an overlaying manner in the corresponding location in the original image sample, each annotation in a corresponding color defined in the annotation strategy for the object class.

13. The data annotation system of any one of claims 9 to 12, **characterized in that** the visualized annotation module is further configured to:
visually present a process of the correction together with the automatic annotation result and the original image sample based on the annotation strategy.

14. The data annotation system of any one of claims 9 to 13, **characterized in that** the data annotation system further comprises a test module configured to perform an accuracy rate test on the automatic annotation result of the current data annotation model; and
in response to an accuracy rate exceeding a first threshold, the model training module reduces frequency at which the data annotation model is optimized.

15. The data annotation system of claim 14, **characterized in that** in response to the accuracy rate exceeding a second threshold greater than the first threshold, the visualized annotation module stops visually presenting the automatic annotation result.

16. The data annotation system of claim 15, **characterized in that** in response to the accuracy rate exceeding a third threshold greater than the second threshold, the model training module stops optimization of the data annotation model.

17. An image segmentation apparatus, **characterized by** comprising:
a storage device configured to store computer instructions; and
a processing unit configured to cause the image segmentation apparatus to implement a data annotation method of any one of claims 1 to 8 when the computer instructions are executed.
